# EUROPÄISCHE PATENTSCHRIFT

(11) **EP 2 088 099 B1**
(45) Veröffentlichungstag und Bekanntmachung des Hinweises auf die Patenterteilung: **07.12.2011**
(21) Anmeldenummer: 09001435.8
(22) Anmeldetag: 03.02.2009
(51) Int. Cl.: B65G 17/12

(54) **Fördereinrichtung zum vertikalen Transport von Stückgut**
Supply device for vertical transport of bulk goods
Dispositif de transport destiné au transport vertical de marchandises au détail

(30) Priorität: 07.02.2008 DE 102008008009
(43) Veröffentlichungstag der Anmeldung: 12.08.2009
(73) Patentinhaber: Kolbus GmbH & Co. KG, 32369 Rahden (DE)
(72) Erfinder: Brommer, Carsten, 49545 Tecklenburg/Leeden (DE); Gerke, Klaus, 27211 Bassum (DE); Tautz, Frank, 32369 Rahden (DE)

(56) Entgegenhaltungen:
- EP-A- 0 001 967
- EP-A- 0 209 638
- FR-A- 2 756 814

## Beschreibung

Die Erfindung betrifft eine Fördereinrichtung zum vertikalen Transport von Stückgut mit je zwei in jeweils deckungsgleichen Bahnen endlos umlaufenden und synchron angetriebenen, inneren und äußeren Fördermitteln, wobei die Bahnen der inneren und äußeren Fördermittel in einem im Wesentlichen vertikalen Trum einen Abstand zueinander aufweisen, und mit mehreren, in einem gleichen gegenseitigen Abstand zueinander, mit ihrem einen Ende an den inneren Fördermitteln und ihrem anderen Ende an den äußeren Fördermitteln angelenkten, in einer ersten Richtung biegsamen und in einer zweiten Richtung querstabilen, im genannten vertikalen Trum im Wesentlichen horizontal vorliegenden Plattformen, denen das Stückgut im Aufnahmebereich von einem ersten Förderer im Wesentlichen horizontal zugeführt wird und die das Stückgut im Abgabebereich im Wesentlichen horizontal an einen zweiten Förderer abgeben.

Fördereinrichtungen dieser Art werden auch als vertikaler Umlaufaufzug, Höhenförderer oder Etagenförderer bezeichnet und sind durch DE 11 71 814 B und DE 38 33 750 A1 bekannt. Sie können, wie in den vorgenannten Dokumenten dargestellt, als S-Förderer ausgebildet sein, bei denen die Abgaberichtung gleich der Zuführrichtung ist, oder sie sind, wie in DE 195 30 288 A1 dargestellt und beschrieben, als C-Förderer ausgebildet, bei denen das Stückgut entgegengesetzt zur Zuführrichtung abgegeben werden. Mit den Fördereinrichtungen kann das Stückgut nach oben oder nach unten gefördert werden.

Aus der FR 2 756 814 A ist ein C-Förderer bekannt, bei dem in beide Richtungen biegsame Plattformen an den inneren und äußeren Fördermitteln angelenkt sind, wobei im besagten vertikalen Trum die Plattformen zwischen den beabstandeten Bahnen der inneren und äußeren Fördermittel horizontal gespannt sind. Durch die in beiden Richtungen biegsamen Plattformen wird ein Bahnverlauf ermöglicht, bei dem die Plattformen nicht oberhalb des oberen Abgabebereich zurückgeführt werden, wie das bei dem C-Förderer aus DE 195 30 288 A1 der Fall ist.

In den oben aufgezeigten Fördereinrichtungen kommen Gliederketten als innere und äußere Fördermittel zum Einsatz, während in DE 39 15 074 A1 ein Höhenförderer mit Zahnriemen dargestellt und beschreiben ist. Die Umlenkungen in den Bahnen der inneren und äußeren Fördermittel sind von Umlenkrädern gebildet. Über eine gemeinsame Antriebs welle werden die inneren und äußeren Fördermittel kontinuierlich mit einer konstanten Fördergeschwindigkeit angetrieben.

Aufgrund der Umlenkung von der horizontalen in die vertikale Förderrichtung und umgekehrt ist ein gegenseitiger Abstand zwischen den Plattformen vorzusehen, welcher größer als die Plattformlänge plus die maximal zu fördernde Stückguthöhe sein muss, damit die Plattformen mit dem darauf liegenden Stückgut kollisionsfrei umlaufen können. Dies erfordert einen relativ großen Taktabstand im zugeführten Produktstrom mit entsprechend hohen Fördergeschwindigkeiten in der Fördereinrichtung und auf den vor- und nachgeordneten Transportsystemen.

Nachteilig bei den bekannten Fördereinrichtungen ist außerdem, dass die Förderleistung durch die in bzw. aus dem vertikalen Trum erfolgende bogenförmige Umlenkung und die dabei auftretenden Fliehkräfte begrenzt ist, damit das Stückgut nicht auf den Plattformen verrutscht. Eine im Produktstrom vorliegende feste Taktfolge wäre damit verloren und die Stückgüter müssten für eine nachfolgende Verarbeitung neu zueinander ausgerichtet bzw. neu getaktet werden. Im schlimmsten Fall würde das Stückgut in der Umlenkung von den Plattformen abrutschen und in die Fördereinrichtung fallen. Gestapelt geförderte Stückgüter würden auseinander fallen oder ihre Ausrichtung zueinander verlieren. Verschiebungen auf den Plattformen können zudem zu Markierungen an empfindlichen Oberflächen führen, wie sie beispielsweise bei Büchern oder dgl. Druckprodukten vorliegen. Die aufgezeigten Mängel sind insbesondere an der oberen Umlenkung zu beobachten. Hier besteht gar bei zu hoher Geschwindigkeit die Gefahr, dass das Stückgut von den Plattformen abhebt.

Der Erfindung liegt die Aufgabe zugrunde, eine Fördereinrichtung zum vertikalen Transport von Stückgut gemäß dem Oberbegriff des Patentanspruchs 1 derart weiterzubilden, dass bei hoher Förderleistung eine schonende Behandlung der Stückgüter gewährleistet ist.

Diese Aufgabe wird durch die Merkmale des Anspruchs 1 gelöst. Die kontinuierliche Geschwindigkeit der Plattformen kann durch die schwellende Fördergeschwindigkeit in den Umlenkungen auf ein solches Maß begrenzt werden, dass die Stückgüter nicht von den Plattformen abheben oder auch nur verrutschen. Durch die anschließende Beschleunigung auf höhere Fördergeschwindigkeiten kann der Durchsatz und damit die Förderleistung der Fördereinrichtung erhöht werden, weil die mittlere Fördergeschwindigkeit gegenüber der konstanten Fördergeschwindigkeit aus dem Stand der Technik größer ist. Je kleiner die zu überwindende Höhe und die damit zu bewegende Masse, desto dynamischer lassen sich die Fördermittel mit den daran angelenkten Plattformen schwellend bewegen, sodass insbesondere bei kleinen Förderhöhen eine deutliche Leistungssteigerung erzielt werden kann.

Bevorzugte Weiterausgestaltungen der erfindungsgemäßen Vorrichtung bilden Gegenstand der abhängigen Ansprüche.

Die Merkmale und Vorteile der vorliegenden Erfindung werden in der folgenden Beschreibung einer bevorzugten Ausführungsform anhand der beigefügten, nachstehend aufgeführten Zeichnungen erläutert. Es zeigen
- **Fig. 1**: eine vertikale Fördereinrichtung 1 mit S-förmig umlaufenden Plattformen in per- spektivischer Ansicht;
- **Fig. 2**: die Fördereinrichtung aus Fig. 1 in einer schematischen Schnittansicht; und
- **Fig. 3**: ein Bewegungsdiagramm für die umlaufenden Plattformen.

Die Fördereinrichtung 1 fördert Stückgüter, z.B. Bücher 3, von einer unteren Förderbahn zu einer oberen Förderbahn oder umgekehrt, wobei die Bücher 3 stets horizontal orientiert sind. Die Fördereinrichtung 1 besteht im Wesentlichen aus vier, in parallelen Ebenen endlos umlaufenden Zahnriemen 4, 5 als Fördermittel, an denen mehrere Plattformen 11 in einem gleichen gegenseitigen Abstand T angeordnet sind. Die jeweils inneren Zahnriemen 4 sowie die jeweils äußeren Zahnriemen 5 weisen deckungsgleiche Bahnen auf, während die inneren und äußeren Zahnriemen 4, 5 in einem vertikalen Trum 12 einen Abstand zueinander aufweisen, der ungefähr der Länge L_{P} einer Plattform 11 entspricht.

Die jeweiligen Bahnen sind durch Umlenkräder 6.1 bis 6.3 bzw. 7.1 bis 7.4 definiert, die in einem nicht näher dargestellten Gestell gelagert sind, wobei die Zahnriemen 4, 5 noch um auf einer gemeinsamen Antriebswelle 10 angeordnete Antriebsräder 8 bzw. 9 laufen, zum synchronen Antrieb der inneren und äußeren Zahnriemen 4, 5.

Die Plattformen 11 befinden sich quasi zwischen den inneren Zahnriemen 4 und sind mit ihrem einen Ende an den inneren Zahnriemen 4 und mit ihrem anderen Ende an den äußeren Zahnriemen 5 angelenkt. Hierzu sind die inneren bzw. äußeren Zahnriemen 4 bzw. 5 an den entsprechenden Stellen mit durch die Plattformen 11 geführte Stangen 11 a, b miteinander verbunden.

Die Plattformen 11 sind in einer ersten, nach innen gerichteten Richtung biegsam ausgebildet, sodass sie den Bahnabschnitten, in denen die inneren und äußeren Zahnriemen 4, 5 deckungsgleich sind, folgen können. In einer zweiten, nach außen gerichteten Richtung sind sie querstabil ausgeführt, sodass sie im genannten vertikalen Trum 12 eine horizontale Plattform darbieten.

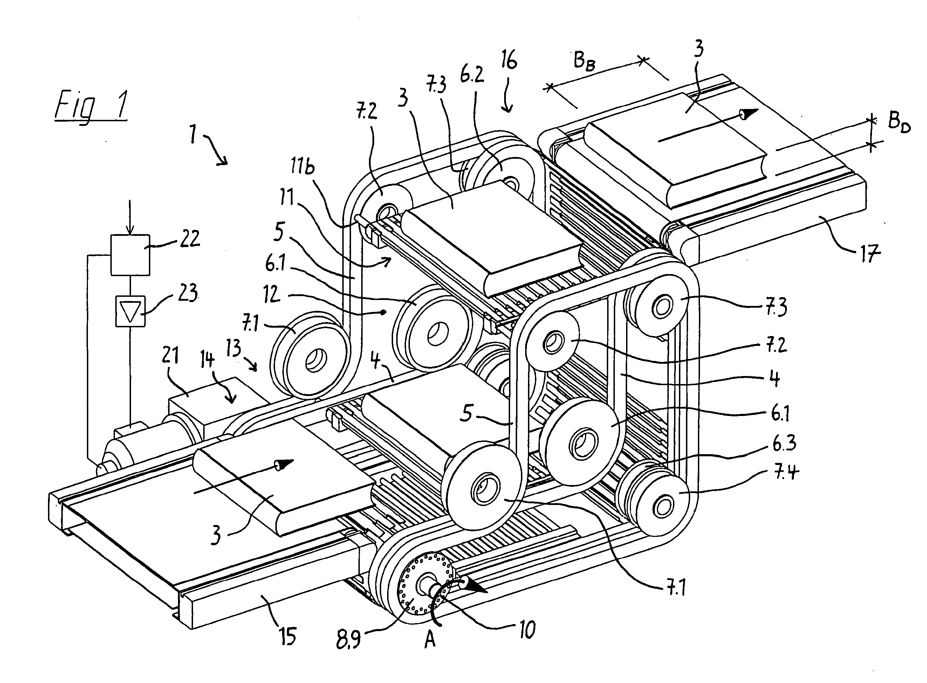

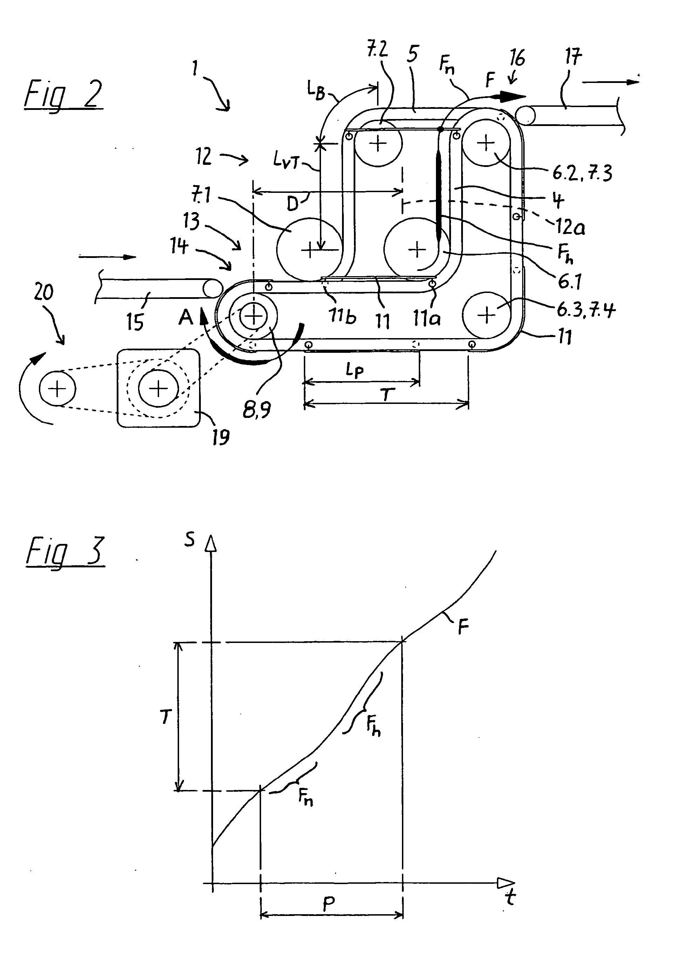

Die Bücher 3 werden im Aufnahmebereich 14 von einem Zuförderer 15 horizontal zugeführt und im Abgabebereich 16 horizontal an einen Wegförderer 17 abgegeben. Im Ausführungsbeispiel ist die Abgaberichtung gleich der Zuführrichtung, weshalb die Fördereinrichtung 1 auch als S-Förderer bezeichnet wird. Der Bahnverlauf kann aber auch derart gestaltet sein, dass die Bücher 3 entgegengesetzt zur Zuführrichtung abgegeben werden. Man spricht dann von einem C-Förderer. Mit der Fördereinrichtung 1 können Bücher 3 nach oben gefördert werden, wie in Fig. 1 und 2 dargestellt, oder mit gegenläufigen Antrieb auch von oben nach unten heruntergefördert werden.

Erfindungsgemäß sind die Zahnriemen 4, 5 mit einer schwellenden Fördergeschwindigkeit F angetrieben, sodass die von den Umlenkrädern 6.2, 7.2 definierte obere Umlenkung von den Plattformen 11 mit einer niedrigen Fördergeschwindigkeit Fₙ durchlaufen wird, während sich davor und danach die Plattformen 11 mit einer höheren Fördergeschwindigkeit Fₕ bewegen.

In Fig. 3 ist ein Bewegungsdiagramm für die umlaufenden Plattformen 11 angegeben. Über die Zeit t ist deren Förderweg s dargestellt. Die Steigung der Kurve gibt die jeweilige Fördergeschwindigkeit F wieder. Das Bewegungsdiagramm weist eine Periode P auf, die hinsichtlich des dabei zurückgelegten Förderwegs gleich dem gegenseitigen Abstand T der Plattformen 11 ist. Die niedrige Fördergeschwindigkeit Fₙ ist dabei über einen definierten, bspw. der Bogenlänge L_{B} entsprechenden Förderweg konstant.

Die schwellende Fördergeschwindigkeit kann taktgenau besonders einfach dadurch bereitgestellt werden, dass gemäß Fig. 2 in der Antriebskopplung 20 mit einem nicht näher dargestellten Antrieb des Zuförderers 15 und/oder des Wegförderers 17 ein Kurvenumlaufgetriebe 19 vorgesehen ist, welches die konstante Antriebsbewegung des Zu- bzw. Wegförderers in eine schwellende Antriebsbewegung A für die Fördereinrichtung 1 umwandelt.

Alternativ kann der Antrieb der Zahnriemen 4, 5 mit einem Getriebeservomotor 21 als separaten Antrieb erfolgen, wie aus Fig. 1 ersichtlich. Der Getriebeservomotor 21 kann nach der zu fördernden Buchbreite B_{B} und/oder der zugeführten Produktfolge veränderbar gesteuert werden, sodass eine teilungsgenaue Zuführung der Bücher 3 nicht erforderlich ist. Die Ansteuerung erfolgt über eine Steuerung 22, in der die Drehposition des Servomotors 21 und damit die jeweilige Lage der Plattformen 11 sowie verschiedene Randbedingungen, wie die Buchbreite B_{B}, die jeweilig zugeführte Produktlage usw., ausgewertet und verarbeitet werden, um über die zugeordnete Motoransteuerung 23 den Getriebeservomotor 21 entsprechend mit einer schwellenden Fördergeschwindigkeit F anzutreiben.

Bei der Fördereinrichtung 1 ist der gegenseitige Abstand T der Plattformen 11 und die Länge L_{vT} des vertikalen Trums 12 derart aufeinander abgestimmt, dass die von den Umlenkrädern 6.1 und 7.1 definierte untere Umlenkung und die von den Umlenkrädern 6.2, 7.2 definierte obere Umlenkung gleichzeitig von den Plattformen 11 mit einer niedrigen Fördergeschwindigkeit Fₙ durchlaufen werden. So ist auch in der unteren Umlenkung eine produktschonende und einwandfreie Förderung gewährleistet. Die Länge L_{vT} des vertikalen Trums 12 plus die zu durchlaufenden Bogenlänge L_{B} in der oberen Umlenkung ist dafür ungefähr gleich einem Vielfachen des gegenseitigen Abstands T der Plattformen 11 auszuführen, wobei bei der Fördereinrichtung 1 ein einfaches Vielfaches vorliegt.

In der Fördereinrichtung 1 ist im Aufnahmebereich 14 ein horizontales Trum 13 vorgesehen, in dem die Bahnen der inneren und äußeren Fördermittel 4, 5 deckungsgleich sind, wobei der Abstand D zwischen der Drehachse der Antriebsräder 8, 9 und der Mittenachse 12 a des vertikalen Trums 12 ungefähr gleich dem gegenseitigen Abstand L_{P} der Plattformen 11 ist. Die Plattformen 11 bewegen sich dadurch mit der niedrigen Fördergeschwindigkeit Fₙ durch die von den Antriebsrädern 8, 9 definierte Umlenkung, sodass die Bücher 3 bei dieser niedrigen Fördergeschwindigkeit Fₙ den Plattformen 11 zuführbar sind. Bei gleicher Förderleistung lässt sich dadurch der Taktabstand und damit die Zuführgeschwindigkeit der Bücher 3 auf dem Zuförderer 15 und weiteren vorgeordneten Transporteinrichtungen reduzieren.

### Bezugszeichenliste

- **1**: Fördereinrichtung
- **3**: Buch
- **4**: Innere Zahnriemen
- **5**: Äußere Zahnriemen
- **6.1** .. **3**: Umlenkräder
- **7.1** .. **4**: Umlenkräder
- **8**: Antriebsrad
- **9**: Antriebsrad
- **10**: Antriebswelle
- **11**: Plattform
- **11 a, b**: Stange
- **12**: Vertikales Trum
- **12 a**: Mittenachse
- **13**: Horizontales Trum
- **14**: Aufnahmebereich
- **15**: Zuförderer
- **16**: Abgabebereich
- **17**: Wegförderer
- **19**: Kurvenumlaufgetriebe

- **20**: Antriebskopplung
- **21**: Getriebeservomotor
- **22**: Steuerung
- **23**: Motoransteuerung
- **B_{B}**: Buchbreite
- **B_{D}**: Buchdicke
- **L_{P}**: Länge Plattform
- **T**: Gegenseitiger Abstand
- **L_{vT}**: Länge vertikales Trum
- **L_{B}**: Bogenlänge
- **D**: Abstand
- **A**: Antriebsbewegung
- **F**: Fördergeschwindigkeit
- **Fₙ**: Niedrige Fördergeschwindigkeit
- **Fₕ**: Hohe Fördergeschwindigkeit
- **t**: Zeit
- **s**: Weg
- **P**: Periode

## Patentansprüche

1. Fördereinrichtung (1) zum vertikalen Transport von Stückgut (3), wie einzelnen oder übereinander gestapelten Buchblocks, Büchern (3) oder dgl. Druckprodukte,
• mit je zwei in jeweils deckungsgleichen Bahnen endlos umlaufenden und synchron angetriebenen, inneren und äußeren Fördermitteln (4, 5), wobei die Bahnen der inneren und äußeren Fördermittel (4, 5) in einem im Wesentlichen vertikalen Trum (12) einen Abstand zueinander aufweisen, und
• mit mehreren, in einem gleichen gegenseitigen Abstand (T) zueinander, mit ihrem einen Ende an den inneren Fördermitteln (4) und ihrem anderen Ende an den äußeren Fördermitteln (5) angelenkten, in einer ersten Richtung biegsamen und in einer zweiten Richtung querstabilen, im genannten vertikalen Trum (12) im Wesentlichen horizontal vorliegenden Plattformen (11), denen das Stückgut (3) im Aufnahmebereich (14) von einem ersten Förderer (15) im Wesentlichen horizontal zugeführt wird und die das Stückgut (3) im Abgabebereich (16) im Wesentlichen horizontal an einen zweiten Förderer (17) abgeben,
**dadurch gekennzeichnet,**
• **dass** die Fördermittel (4, 5) mit einer schwellenden Fördergeschwindigkeit (F) angetrieben sind, wobei die schwellende Fördergeschwindigkeit (F) eine auf den Förderweg bezogene Periode (P) aufweist, die gleich dem gegenseitigen Abstand (T) der Plattformen (11) ist,
• **dass** der gegenseitige Abstand (T) der Plattformen (11) und die Länge (L_{vT}) des vertikalen Trums (12) derart aufeinander abgestimmt sind,
**dass** die das genannte vertikale Trum (12) am unteren Ende begrenzende Umlenkung (6.1, 7.1) und die das genannte vertikale Trum (12) am oberen Ende begrenzende Umlenkung (6.2, 7.2) ungefähr gleichzeitig von jeweiligen Plattformen (11) mit einer niedrigen Fördergeschwindigkeit (Fₙ) durchlaufen werden, während sich die Plattformen (11) davor und danach mit einer höheren Fördergeschwindigkeit (Fₙ) bewegen, und
• **dass** der Aufnahmebereich (14) oder/und der Abgabebereich (16) derart ausgebildet ist, dass das Stückgut (3) bei der niedrigen Fördergeschwindigkeit (Fₙ) den Plattformen (11) zuführbar ist bzw. abgegeben wird.

2. Fördereinrichtung nach Anspruch 1, **dadurch gekennzeichnet, dass** die niedrige Geschwindigkeit (Fₙ) über einen definierten Förderweg konstant ist.

3. Fördereinrichtung nach Anspruch 1 oder 2, **dadurch gekennzeichnet, dass** die Fördermittel (4, 5) von einem mechanischen Übertragungsgetriebe, z.B. einem Kurvenumlaufgetriebe (19), angetrieben sind, in dem die schwellende Fördergeschwindigkeit (F) fest vorgegeben ist.

4. Fördereinrichtung nach einem der Ansprüche 1 bis 3, **dadurch gekennzeichnet, dass** den Fördermitteln (4, 5) ein steuerbarer, vorzugsweise separater Antrieb (21) zugeordnet ist.

5. Fördereinrichtung nach Anspruch 4, **dadurch gekennzeichnet, dass** die Fördergeschwindigkeit (F) nach der Stückgutlänge (B_{B}) und/oder der zugeführten Produktfolge veränderbar gesteuert ist.

## Claims

1. A supply device (1) for the vertical transport of bulk goods (3) such as individual or stacked book blocks, books (3) or similar printed products,
• with two respective inner and outer conveying means (4, 5) that endlessly revolve in respectively congruent tracks and are synchronously driven, wherein the tracks of the inner and outer conveying means (4, 5) are spaced apart from one another in an essentially vertical run (12), and
• with several platforms (11) that are coupled to the inner conveying means (4) with one end and to the outer conveying means (5) with their other end at an identical mutual distance (T) from one another, wherein said platforms are flexible in a first direction and laterally stable in a second direction and essentially arranged horizontally in the aforementioned vertical run (12), and wherein the bulk goods (3) are essentially fed to said platforms horizontally by a first conveyor (15) in the receiving area (14) and the platforms essentially deliver the bulk goods (3) to a second conveyor (17) horizontally in the delivery area (16),
**characterized in**
• **that** the conveying means (4, 5) are driven with a cyclic conveying speed (F), wherein the cyclic conveying speed (F) has, referred to the conveying path, a period (P) that is identical to the mutual distance (T) between the platforms (11), in
• **that** the mutual distance (T) between the platforms (11) and the length (L_{VT}) of the vertical run (12) are adapted to one another in such a way that platforms (11) respectively pass the deflection (6.1, 7.1) defining the lower end of the vertical run (12) and the deflection (6.2, 7.2) defining the upper end of said vertical run (12) about simultaneously with a slow conveying speed (Fₙ) while the preceding and following platforms (11) move with a faster conveying speed (Fₕ), and in
• **that** the receiving area (14) and/or the delivery area (16) is/are realized in such a way that the bulk goods (3) can be fed to and delivered by the platforms (11) at the slow conveying speed (Fₙ).

2. The supply device according to Claim 1, **characterized in that** the slow speed (Fₙ) is constant over a defined conveying path.

3. The supply device according to Claim 1 or 2, **characterized in that** the conveying means (4, 5) are driven by a mechanical transfer gear such as, e.g., an epicyclic cam gear (19), in which the cyclic conveying speed (F) is permanently specified.

4. The supply device according to one of Claims 1 to 3, **characterized in that** a preferably separate controllable drive (21) is assigned to the conveying means (4, 5).

5. The supply device according to Claim 4, **characterized in that** the conveying speed (F) is variably controlled in accordance with the length (B_{B}) of the bulk goods and/or the supplied product sequence.

## Revendications

1. Système de convoyage (1) pour le transport vertical de produits au détail (3), comme des corps d'ouvrage individuels ou empilés les uns sur les autres (3) ou similaires
• avec chaque fois deux moyens de convoyage (4, 5) en rotation sans fin dans des voies coïncidentes et à entraînement synchrone, les voies des moyens de convoyage intérieurs et extérieurs (4, 5) présentant un écart mutuel dans un brin (12) sensiblement vertical et
• avec plusieurs plateformes (11) se présentant sensiblement à l'horizontale, à un même écart (T) mutuel dans ledit brin vertical (12), articulées par l'une de leurs extrémités sur les moyens de convoyage intérieurs (4) et par leur autre extrémité sur les moyens de convoyage extérieurs (5), flexibles dans une première direction et stables à la transversale dans une deuxième direction, vers lesquelles les produits au détail (3) sont amenés sensiblement à l'horizontale dans la zone de réception (14) d'un premier convoyeur (15) et qui déchargent sensiblement à l'horizontale les produits au détail (3) dans la zone de décharge (16) sur un deuxième convoyeur (17),
**caractérisé en ce que**
• les moyens de convoyage (4, 5) sont entraînés à une vitesse de transport fluctuante (F), la vitesse de transport fluctuante (F) présentant une période se rapportant au trajet de transport (P) qui est égale à l'écart mutuel (T) entre les plateformes (11)
• **en ce que** l'écart mutuel (T) entre les plateformes (11) et la longueur (L_{vT}) du brin vertical (12) sont adaptés l'un à l'autre de telle sorte
que le renvoi (6.1, 7.1) délimitant ledit brin vertical (12) sur l'extrémité inférieure et le renvoi (6.2, 7.2) délimitant ledit brin vertical sur l'extrémité supérieure sont traversés environ en même temps par des plateformes (11) respectives à une faible vitesse de transport (Fₙ),
alors qu'avant et après, les plateformes (11) se déplacent à une vitesse de transport (Fₕ) plus élevée et
• **en ce que** la zone de réception (14) et/ou la zone de décharge (16) est conçue de sorte que les produits au détail (3) puissent être amenés vers les plateformes (11) ou sont déchargés à la faible vitesse de transport (Fₙ).

2. Système de convoyage selon la revendication 1, **caractérisé en ce que** la faible vitesse (Fₙ) est constante sur un trajet de transport défini.

3. Système de convoyage selon la revendication 1 ou 2, **caractérisé en ce que** les moyens de convoyage (4, 5) sont entraînés par une transmission mécanique par ex. par un engrenage, planétaire à came (19), dans laquelle la vitesse de transport (F) fluctuante est fixement prédéfinie.

4. Système de convoyage selon l'une quelconque des revendications 1 à 3, **caractérisé en ce qu'**un entraînement (21) pilotable, de préférence séparé est associé aux moyens de convoyage (4, 5).

5. Système de convoyage selon la revendication 4, **caractérisé en ce que** la vitesse de transport (F) est pilotée de façon variable en fonction de la longueur (B_{B}) des produits au détail et/ou de la séquence des produits amenés.
